# EUROPÄISCHE PATENTANMELDUNG

(11) **EP 4 307 744 A1**
(43) Veröffentlichungstag der Anmeldung: **17.01.2024**
(21) Anmeldenummer: 23179121.1
(22) Anmeldetag: 14.06.2023
(51) Int. Cl.: H04W 12/50, H04L 12/28, G06F 21/44

(54) **SICHERE AUTHENTIFIZIERUNG UND VERBINDUNG ZWEIER HAUSHALTSGERÄTE MITTELS BLUETOOTH-LOW-ENERGY-TECHNOLOGIE**

(30) Priorität: 11.07.2022 BE 202205562
(71) Anmelder: Miele & Cie. KG, 33332 Gütersloh (DE)
(72) Erfinder: Timmer, Johannes, 32760 Detmold (DE); Korff, Stefan, 33813 Oerlinghausen (DE)

(57) **Zusammenfassung**

Ein Verfahren umfassend die Schritte Einlesen eines Kopplungsmusters, wobei das Kopplungsmuster durch einen vom ersten und zweiten Haushaltsgerät (3) unabhängigen vertrauenswürdigen Dienst (5) mittels einer sicheren und authentifizierten Verbindung (13a) zur Eingabe an der Eingabeeinheit (11) bereitgestellt wurde, Berechnen einer Transaktionsnummer aus dem eingegebenen Kopplungsmuster durch das erste Haushaltsgerät (1), bei der Authentifizierung und/oder Verbindung zwischen dem ersten Haushaltsgerät (1) mit dem zweiten Haushaltsgerät (3) Senden der berechneten Transaktionsnummer von dem ersten Haushaltsgerät (1) an das zweite Haushaltsgerät (3) mittels Bluetooth-Low-Energy-Technologie. Ein komplementäres Verfahren umfassend die Schritte Empfangen einer Referenz-Transaktionsnummer durch das zweite Haushaltsgerät (3), wobei die Referenz-Transaktionsnummer von einem vertrauenswürdigen Dienst (5) über eine sichere und authentifizierte Verbindung an das zweite Haushaltsgerät (3) gesendet wurde, wobei der vertrauenswürdige Dienst (5) vom ersten und zweiten Haushaltsgerät (3) unabhängig ist, bei der Authentifizierung und/oder Verbindung zwischen dem ersten Haushaltsgerät (1) mit dem zweiten Haushaltsgerät (3) Empfangen einer von dem ersten Haushaltsgerät (1) mittels Bluetooth-Low-Energy-Technologie an das zweite Haushaltsgerät (3) gesendeten Transaktionsnummer, wobei die Transaktionsnummer von dem ersten Haushaltsgerät (1) aus einem am ersten Haushaltsgerät (1) eingegebenen Kopplungsmuster berechnet wurde, Vergleichen der Referenz-Transaktionsnummer mit der von dem zweiten Haushaltsgerät (3) gesendeten Transaktionsnummer, Authentifizieren und/oder Verbinden zwischen dem ersten und dem zweiten Haushaltsgerät (3), wenn die übersandte Transaktionsnummer mit der Referenz-Transaktionsnummer übereinstimmt.

## Beschreibung

Die Erfindung betrifft ein Verfahren zur sicheren Authentifizierung und Verbindung eines ersten Haushaltsgeräts mit einem zweiten Haushaltsgerät mittels Bluetooth-Low-Energy-Technologie. Die Erfindung betrifft zudem ein Verfahren zur sicheren Authentifizierung und Verbindung eines zweiten Haushaltsgeräts mit einem ersten Haushaltsgerät mittels Bluetooth-Low-Energy-Technologie. Die Erfindung betrifft schließlich ein Haushaltsgerät. Der Gegen-stand der Erfindung ist in den beigefügten Patentansprüchen definiert.

Im Stand der Technik sind Verfahren bekannt, mit denen Geräte über die bekannte und technisch standardisierte Bluetooth-Low-Energy-Technologie (BLE) sicher authentifizierbar und miteinander verbindbar sind. Ein Beispiel hierfür ist die Verwendung des im BLE-Standard definierten LE Security Mode 1 Level 3 oder Level 4 und die Verwendung des Passkey Entry Protocols bzw. "Association Model". Wird eine BLE-Verbindung unter Verwendung der vorge-nannten Sicherheitsmaßnahmen authentifiziert und aufgebaut, kann das Risiko von sogenannten Man-in-the-Middle (MitM)-Attacken deutlich minimiert oder sogar verhindert werden.

Eine im BLE-Standard genannte Voraussetzung für eine sichere Authentifizierung und Verbindung ist jedoch, dass beide Geräte über die notwendigen Eingabemittel (Tastatur oder ver-gleichbare Eingabemethoden) und/oder Anzeigemittel verfügen. Eine authentifizierte BLE-Verbindung zwischen zwei Geräten, von denen ein Gerät weder Tastatur noch Anzeigemittel aufweist, ist daher im Stand der Technik nicht möglich bzw. nur mit Hilfe von weiteren Kommunikationskanälen wie bspw. NFC.

Dies ist der typische Fall im Bereich von Haushaltsgeräten, da Haushaltsgeräte im Normalfall keine im Sinne des BLE-Standards zur Authentifizierung geeigneten Eingabemittel und Anzeigemittel aufweisen. Beispiele für derartige Haushaltsgeräte können Herd, Backofen, Dampfgarer, Dunstabzugshaube oder Sensorgargeschirr sein. In den letzten Jahren ist die Tendenz erkennbar, derartige Haushaltsgeräte in bestehende Internet-of-Things-Netzwerke (loT-Netzwerke), z.B. in Haushalten, mittels BLE einzubinden oder auch nur einzelne Geräte miteinander zu vernetzen. Ohne eine authentifizierte Verbindung zwischen den Geräten ist jedoch die Netzwerkintegrität und -sicherheit stark gefährdet. Oder allgemein der "Schutz der Kommunikation". In erster Linie ist die Authentizität/Integrität und Vertraulichkeit der Daten gefährdet, die übertragen werden. Mit Blick auf zunehmende Cyberattacken und unter Berücksichtigung der o.g. üblichen Einschränkungen hinsichtlich Ein- und Ausgabemitteln bietet der Stand der Technik derzeit keine adäquate Möglichkeit, Haushaltsgeräte in loT-Netzwerke sicher einzubinden bzw. untereinander sicher zu verbinden, was einen großen Nachteil im Stand der Technik darstellt.

Es ist daher Aufgabe der vorliegenden Erfindung, die Nachteile im Stand der Technik zu verbessern und ein Verfahren bereitzustellen, das eine sichere Authentifizierung und Verbindung zwischen einem ersten Haushaltsgerät mit nur eingeschränkten Eingabe- und Ausgabemitteln mit einem zweiten Haushaltsgerät erlaubt. Es ist weiterhin Aufgabe der vorliegenden Erfindung, Haushaltsgeräte bereitzustellen, die zur Ausführung der Verfahren eingerichtet sind.

Die Aufgabe wird durch das Verfahren gemäß der miteinander zusammenwirkenden Ansprüche 1 und 7 sowie durch ein Haushaltsgerät gemäß Anspruch 15 gelöst. Bevorzugte erfindungsgemäße Ausgestaltungen ergeben sich aus den Unteransprüchen und den nachfolgen-den Ausführungen.

Gemäß einem ersten Aspekt der Erfindung wird die Aufgabe durch ein Verfahren zur sicheren Authentifizierung und Verbindung eines ersten Haushaltsgeräts mit einem zweiten Haushaltsgerät mittels Bluetooth-Low-Energy-Technologie gelöst, welches die Schritte umfasst:
- Einlesen eines Kopplungsmusters, welches mittels einer Eingabeeinheit des ersten Haushaltsgeräts vorzugsweise durch einen Nutzer eingegeben wurde,
- wobei das Kopplungsmuster durch einen vom ersten und zweiten Haushaltsgerät unabhängigen vertrauenswürdigen Dienst mittels einer sicheren und authentifizierten Verbindung zur Eingabe an der Eingabeeinheit bereitgestellt wurde,
- Berechnen einer Transaktionsnummer aus dem eingegebenen Kopplungsmuster durch das erste Haushaltsgerät,
- bei der Authentifizierung und/oder Verbindung zwischen dem ersten Haushaltsgerät mit dem zweiten Haushaltsgerät Senden der berechneten Transaktionsnummer von dem ersten Haushaltsgerät an das zweite Haushaltsgerät mittels Bluetooth-Low-Energy-Technologie.

Im Sinne der Erfindung beschreibt eine sichere Authentifizierung und Verbindung den Aufbau einer Funkverbindung mittels BLE, bei der eine (Man in the middle) MitM-Attacke stark erschwert oder unterbunden wird.

Ein erstes und ein zweites Haushaltsgerät können jeweils ein Gerät aus der folgenden Liste sein: ein Kochfeld, ein Backofen, ein Herd, ein Grill, eine Mikrowelle, ein Dampfgarer, eine Küchenmaschine, eine Dunstabzugshaube, ein Sensorgargeschirr oder jedes andere Haushaltsgerät, insbesondere zur Verwendung in der Küche.

Im Sinne der Erfindung beschreibt BLE die technisch standardisierte Bluetooth-Funktechnologie ab Version 4.0 sowie nachfolgende Versionen.

Eine Eingabeeinheit kann jede geeignete technische Vorrichtung sein, die einen Nutzer mit einem Haushaltsgerät interagieren lässt. Beispiele für eine Eingabeeinheit können ein Mittel oder eine Kombination von mehreren gleichen oder unterschiedlichen Mitteln aus der folgenden Liste sein: Schalter, Taster, Drehschalter, Touchpad, berührungsempfindliche Flächen, Näherungssensor. Es ist aber auch denkbar, dass die Eingabeeinheit einen Near-Field-Communication-Empfänger aufweist. Kopplungsmuster im Sinne der Erfindung ist eine festgelegte Reihenfolge oder Abfolge von Betätigungen der Eingabeeinheit des ersten Haushalts-geräts. Ein Einlesen eines Kopplungsmusters im Sinne der Erfindung entspricht einem Betätigen der Eingabeeinheit bzw. einer Abfolge von Betätigungen der Eingabeeinheit, welche vom Haushaltsgerät erfasst werden und gespeichert werden können.

Unter dem vertrauenswürdigen Dienst kann im Sinne der Erfindung eine Softwareanwendung verstanden werden, welche unabhängig von dem ersten und zweiten Haushaltsgerät auf einem Computer oder Server oder einem anderen geeigneten Gerät ausgeführt wird. Ein Beispiel für ein derartiges Gerät kann ein Backendsystem in einer gesicherten Umgebung sein, auf den über das Internet zugegriffen werden kann. Der vertrauenswürdige Dienst kann beispielsweise auch eine Cloudanwendung sein, die über das Internet Daten senden kann.

Unter der Bereitstellung eines Kopplungsmusters mittels einer sicheren und authentifizierten Verbindung zur Eingabe kann im Sinne der Erfindung eine Übermittelung, d.h. Senden, des Kopplungsmuster über eine verschlüsselte Verbindung gemeint sein, wobei die Verbindungsteilnehmer einander vor Herstellung der verschlüsselten Verbindung einander bekannt waren. Ein Beispiel hierfür kann das Einloggen eines Nutzers bei der Cloudanwendung mittels einer Mobilgerätapplikation sein, wobei die Cloudanwendung nach Einloggen (und der dadurch aufgebauten verschlüsselten Verbindung) das Kopplungsmuster an die Mobilgerätapplikation überträgt.

Das Verfahren gemäß dem ersten Aspekt der Erfindung hat den Vorteil, dass ein Haushaltsgerät mit nur sehr limitierten Eingabemöglichkeiten mit einem zweiten Haushaltsgerät mittels BLE authentifiziert und sicher verbunden werden kann, was bisher im Stand der Technik nicht möglich war bzw. nur durch Nutzung eines (Out of band) OOB-Kommunikationskanals, wie bspw. NFC. Das hat natürlich Kosten zur Folge und unterstreicht damit das im Nachgang aufgeführte Argument. Damit besteht keine Notwendigkeit, Haushaltsgeräte mit einer Tastatur und/oder Anzeige auszurüsten, was zu geringen Kosten für die Geräte führen kann. Zu-dem umfasst das Verfahren nur eine geringe Anzahl von Schritten und ist somit einfach und mit wenig Aufwand umsetzbar. Durch den geringen Umsetzungsaufwand ist es ggf. auch leicht in bestehende (erste) Haushaltsgeräte z.B. mittels eines Soft- oder Firmware-Updates nachrüstbar.

In einer Ausführungsform des Verfahrens gemäß dem ersten Aspekt der Erfindung wird das Kopplungsmuster über ein Mobilgerät und/oder eine Mobilgerätapplikation dem Nutzer zur Eingabe dargestellt oder bereitgestellt.

Eine Mobilgerätapplikation im Sinne der Erfindung kann ein Computerprogrammprodukt sein, welches auf einem Mobilgerät ausführbar ist oder ausgeführt werden kann und ein computerimplementiertes Verfahren durchführen kann. Beispiele für ein Mobilgerät sind ein Mobiltelefon, ein Smartphone, eine Smartwatch, ein Tablet-PC, ein Notebook-PC oder jedes andere Computergerät für den mobilen Einsatz.

Vorzugsweise kann über das Mobilgerät bzw. die Mobilgerätapplikation das Verfahren zur Authentifizierung und Verbindung gestartet werden. Dazu betätigt der Nutzer die Mobilgerätapplikation entsprechend. Die Mobilgerätapplikation teilt dem vertrauenswürdigen Dienst mit, dass das Verfahren zur Authentifizierung und Verbindung zwischen dem ersten und zweiten Haushaltsgerät gestartet werden soll. Der vertrauenswürdige Dienst übermittelt dann infolgedessen ein Kopplungsmuster an das Mobilgerät bzw. die Mobilgerätapplikation und eine Referenz-Transaktionsnummer an das zweite Haushaltsgerät.

Das computerimplementierte Verfahren kann beispielsweise die folgenden Schritte umfassen:
- Aufbau einer gesicherten Verbindung mit einem vertrauenswürdigen Dienst,
- Empfangen eines Kopplungsmusters von dem vertrauenswürdigen Dienst,
- Anzeige des Kopplungsmusters derart, dass das Kopplungsmuster mit den Eingabemitteln des ersten Haushaltsgeräts korrespondiert.

Die Darstellung des Kopplungsmusters bzw. die Anzeige des Kopplungsmusters kann im Sinne der Erfindung jede Darstellung oder Anzeige meinen, die den Nutzer bei der Eingabe derart unterstützt, so dass das vom ersten Haushaltsgerät eingelesenen Kopplungsmuster (ggf. innerhalb definierter Fehlergrenzen) dem vom vertrauenswürdigen Dienst versandten Kopplungsmuster entspricht. Die Nutzereingabe stellt in diesem Fall eine vertrauenswürdige Ver-bindung zwischen dem über eine gesicherte Verbindung mit der dem vertrauenswürdigen Dienst verbundenen Mobilgerät bzw. der Mobilgerätapplikation und dem ersten Haushaltsgerät her.

Die Bereitstellung des Kopplungsmusters kann im Sinne der Erfindung beispielsweise eine ortsnahe Übertragung mittels einer Near-Field-Communication-Sendeeinrichtung (NFC) im Mobilgerät an das erste Haushaltsgerät erfolgen. In diesem Fall kann die Eingabeeinheit des ersten Haushaltsgeräts einen NFC-Empfänger und das Mobilgerät kann einen NFC-Sender aufweisen. Zur Übermittlung des Kopplungsmusters wird der NFC-Sender des Mobilgeräts im Abstand von wenigen Zentimetern zum NFC-Empfänger angeordnet und das Mobilgerät bzw. die Mobilgerätapplikation kann übermitteln das vom vertrauenswürdigen Dienst empfangene Kopplungsmuster übermitteln. In diesem Fall kann das Kopplungsmuster auch eine Transaktionsnummer sein, welche der vertrauenswürdige Dienst an das Mobilgerät bzw. die Mobilgerätapplikation gesendet hat. Der Schritt des Berechnens einer Transaktionsnummer aus dem eingegebenen Kopplungsmuster kann in diesem Fall beispielsweise eine Berechnung einer Prüfsumme der Transaktionsnummer sein.

Die Darstellung des Kopplungsmusters über eine Mobilgerätapplikation hat den Vorteil, dass der Nutzer derart durch die Darstellung geführt werden kann, dass Fehler bei der Eingabe vermieden oder minimiert werden und die darauf aufbauenden Schritte erfolgreich sind. Dies steigert zudem die Kundenzufriedenheit. Die Bereitstellung des Kopplungsmusters über eine Mobilgerätapplikation und beispielsweise die Übertragung mittels NFC hat den Vorteil, dass eine Nutzereingabe vermieden wird und die Übermittelung und Authentifizierung stark vereinfacht wird. Dies vereinfacht das Verfahren gemäß dem ersten Aspekt der Erfindung und ist zudem schnell durchführbar und fehlersicher.

In einer Ausführungsform des Verfahrens gemäß dem ersten Aspekt der Erfindung wird vor der Darstellung oder Bereitstellung zur Eingabe das Kopplungsmuster von dem vertrauenswürdigen Dienst an das Mobilgerät und/oder die Mobilgerätapplikation versandt und durch das Mobilgerät und/oder die Mobilgerätapplikation empfangen.

Das hat den Vorteil, dass dem Nutzer das Kopplungsmuster vor oder während der Eingabe des Kopplungsmusters in der Nähe des ersten Haushaltsgeräts angezeigt werden kann.

In einer Ausführungsform des Verfahrens gemäß dem ersten Aspekt der Erfindung ist die sichere und authentifizierte Verbindung zwischen dem Mobilgerät und/oder der Mobilgerätapplikation und dem vertrauenswürdigen Dienst eine mittels Transport Layer Security-Protokoll gesicherte Mobilfunk- oder WLAN-Verbindung über das Internet.

Das hat den Vorteil, dass die Datenkommunikation zwischen dem vertrauenswürdigen Dienst und dem Mobilgerät und/oder der Mobilgerätapplikation nicht oder nur sehr schwer abgehört werden kann und somit ein geringes Risiko für eine Cyberattacke bietet.

In einer Ausführungsform des Verfahrens gemäß dem ersten Aspekt der Erfindung umfasst die Eingabeeinheit des ersten Haushaltsgeräts wenigstens zwei Tasten.

Die Tasten können sowohl als Schalter, Taster, Drehschalter, Touchpad, berührungsempfindliche Flächen oder Näherungssensor ausgestaltet sein.

Das hat den Vorteil, dass mit einfachen technischen und kostengünstigen Mitteln eine Mensch-Maschine-Interaktion zwischen dem Nutzer und dem ersten Haushaltsgerät ermöglicht wird.

In einer Ausführungsform des Verfahrens gemäß dem ersten Aspekt der Erfindung entspricht das Kopplungsmuster einer Abfolge von Tastenbetätigungen.

Das hat den Vorteil, dass damit die notwendige Anzahl der Berechnung der Transaktionsnummer bei der Eingabe erreicht werden kann.

In einer Ausführungsform des Verfahrens gemäß dem ersten Aspekt der Erfindung entsteht die Abfolge von Tastenbetätigungen durch Variation mindestens einer der nachfolgenden Parameter: Dauer der Tastenbetätigung, Dauer zwischen Tastenbetätigungen, Anzahl der Tastenbetätigung, Abfolge der Betätigung gleicher und/oder unterschiedlicher Tasten.

Beispielsweise kann die Abfolge von Tastenbetätigungen lediglich aus der Abfolge unterschiedlicher Tasten (bspw. Tasten A und B) bestehen. Ein Beispiel hierzu könnte wie folgt aussehen: A - B - B - A - B - A. Beispielsweise kann auch eine Variation der Dauer der Tastenbetätigungen (bspw. lange und kurze Betätigung) mit einer Abfolge der Betätigung unter-schiedlicher Tasten (bspw. Tasten A und B) kombiniert werden: A (lang) - B (kurz) - B (lang) - A (kurz) - A (kurz) -B (lang). Alternativ oder zusätzlich ist auch denkbar, dass mindestens zwei Tasten gleichzeitig gedrückt werden.

Das hat den Vorteil, dass ein für den Nutzer geeignetes, eindeutiges und einfaches Eingabeschema gewählt werden kann, was die Erfolgswahrscheinlichkeit der korrekten Eingabe des Kopplungsmusters erhöht.

Gemäß einem zweiten Aspekt der Erfindung wird die Aufgabe durch ein Verfahren zur sicheren Authentifizierung und Verbindung eines zweiten Haushaltsgerätes mit einem ersten Haushaltsgerät mittels Bluetooth-Low-Energy-Technologie gelöst, welches die Schritte umfasst:
- Empfangen einer Referenz-Transaktionsnummer durch das zweite Haushaltsgerät, wobei die Referenz-Transaktionsnummer von einem vertrauenswürdigen Dienst über eine sichere und authentifizierte Verbindung an das zweite Haushaltsgerät gesendet wurde,
- wobei der vertrauenswürdige Dienst vom ersten und zweiten Haushaltsgerät unabhängig ist,
- bei der Authentifizierung und/oder Verbindung zwischen dem ersten Haushaltsgerät mit dem zweiten Haushaltsgerät Empfangen einer von dem ersten Haushaltsgerät mittels Bluetooth-Low-Energy-Technologie an das zweite Haushaltsgerät gesendeten Transaktionsnummer,
- wobei die Transaktionsnummer von dem ersten Haushaltsgerät aus einem am ersten Haushaltsgerät eingegebenen Kopplungsmuster berechnet wurde,
- Vergleichen der Referenz-Transaktionsnummer mit der von dem zweiten Haushaltsgerät gesendeten Transaktionsnummer,
- Authentifizieren und/oder Verbinden zwischen dem ersten und dem zweiten Haushaltsgerät, wenn die übersandte Transaktionsnummer mit der Referenz-Transaktionsnummer übereinstimmt.

Für die im Zusammenhang mit dem zweiten Aspekt der Erfindung verwendeten Ausdrücke und Begriffe sei auf die entsprechenden Ausdrücke, Begriffe und Erläuterungen zum ersten und dritten Aspekt der Erfindung verwiesen, auf deren Wiederholung der besseren Lesbarkeit wegen an dieser Stelle verzichtet wird.

Die Referenz-Transaktionsnummer im Sinne der Erfindung ist die Transaktionsnummer, die auf einem authentifizierten Kanal dem zweiten Haushaltsgerät vom vertrauenswürdigen Dienst übermittelt wurde und welche nach Übersendung der Referenznummer von dem ersten Haushaltsgerät die Basis des Vergleichs darstellt. Dabei erfolgt die Übermittelung der Referenz-Transaktionsnummer von dem vertrauenswürdigen Dienst an das zweite Haushaltsgerät vorzugsweise über das Internet.

Das Verfahren gemäß dem zweiten Aspekt der Erfindung hat den Vorteil, dass ein zweites Haushaltsgerät mit einem ersten Haushaltsgerät mit nur sehr limitierten Eingabemöglichkeiten mittels BLE authentifiziert und sicher verbunden werden kann, was bisher im Stand der Technik nicht möglich war. Das Verfahren umfasst nur eine geringe Anzahl von Schritten und ist somit einfach und mit wenig Aufwand umsetzbar. Durch den geringen Umsetzungsaufwand ist es ggf. auch leicht in bestehende (zweite) Haushaltsgeräte z.B. mittels eines Soft- oder Firmware-Updates nachrüstbar. Zudem wirkt das Verfahren gemäß dem zweiten Aspekt der Erfindung synergistisch mit dem Verfahren gemäß dem ersten Aspekt der Erfindung zusammen. Dies ergibt sich aus der Tatsache, dass das (Referenz-)Transaktionsnummer-Kopplungsmuster-Paar von dem gleichen vertrauenswürdigen Dienst erstellt wurde und über jeweils authentifizierte Kanäle an das erste Haushaltsgerät mittelbar und an das zweite Haushaltsgerät unmittelbar übermittelt wird.

In einer Ausführungsform gemäß dem zweiten Aspekt der Erfindung ist die sichere und authentifizierte Verbindung zwischen dem zweiten Haushaltsgerät und dem vertrauenswürdigen Dienst eine mittels Transport Layer Security-Protokoll gesicherte WLAN- oder Ethernet-Verbindung über das Internet.

Eine derartige Verbindung ermöglicht eine sichere Übermittlung der Referenz-Transaktionsnummer an das zweite Haushaltsgerät.

In einer Ausführungsform des Verfahrens gemäß dem ersten Aspekt der Erfindung oder dem zweiten Aspekt der Erfindung ist der vertrauenswürdige Dienst ein Cloudservice oder ein Backendsystem in einer gesicherten Umgebung.

Das hat den Vorteil, dass zentral eine vertrauenswürdige Möglichkeit zur Bereitstellung von Referenz-Transaktionsnummern und Kopplungsmustern bereitgestellt werden kann. Dies erleichtert die Einrichtung der authentifizierten Verbindung zwischen dem ersten und zweiten Haushaltsgerät für den Nutzer und senkt die Betriebskosten für den vertrauenswürdigen Dienst für den Hersteller.

In einer Ausführungsform des Verfahrens gemäß dem ersten Aspekt der Erfindung oder dem zweiten Aspekt der Erfindung wird das Kopplungsmuster durch den vertrauenswürdigen Dienst aus der Referenz-Transaktionsnummer berechnet oder wird die Referenz-Transaktionsnummer aus dem Kopplungsmuster berechnet.

Ein Kopplungsmuster oder eine Referenz-Transaktionsnummer kann beispielsweise zunächst über einen Zufallsgenerator erzeugt werden. Alternativ kann es auch eine festgelegte Berechnungsvorschrift zur Erzeugung von Referenz-Transaktionsnummern oder Kopplungsmuster bereitgestellt sein. Die Erzeugung einer Referenz-Transaktionsnummer aus einem zuvor erzeugten Kopplungsmuster oder die Erzeugung eines Kopplungsmusters aus einer zuvor bereitgestellten Referenz-Transaktionsnummer kann beispielsweise über mathematische Funktionen erfolgen.

Das hat den Vorteil, dass es eine Beziehung zwischen dem Kopplungsmuster und der Referenz-Transaktionsnummer besteht. Damit kann durch das erste Haushaltsgerät aus dem ein-gegebenen Kopplungsmuster eine Transaktionsnummer berechnet werden, die bei vorheriger korrekter Eingabe des Kopplungsmusters der Referenz-Transaktionsnummer entspricht. Damit ist eine Authentifizierung des ersten und zweiten Haushaltsgeräts möglich.

In einer Ausführungsform des Verfahrens gemäß dem ersten Aspekt der Erfindung oder dem zweiten Aspekt der Erfindung wird bei der Authentifizierung und/oder Verbindung Bluetooth-Low-Energy Security Mode 1 Level 3 oder Level 4 verwendet.

Der BLE Security Mode 1 Level 3 und Level 4 wird in der technischen Dokumentation des BLE-Standards ausführlich beschrieben. Die Verwendung der Security Mode 1 Level 3 und Level 4 erlaubt den Aufbau einer sicheren und authentifizierten Verbindung zwischen dem ersten und dem zweiten Haushaltsgerät.

In einer Ausführungsform des Verfahrens gemäß dem ersten Aspekt der Erfindung oder dem zweiten Aspekt der Erfindung wird bei der Authentifizierung und/oder Verbindung zwischen dem ersten Haushaltsgerät mit dem zweiten Haushaltsgerät die Transaktionsnummer im Bluetooth-Low-Energy Passkey Entry Association Model verwendet.

Das BLE Passkey Entry Protocol wird in der technischen Dokumentation des BLE-Standards ausführlich beschrieben. Das BLE Passkey Entry Association Model ist ein für die sichere Authentifizierung und Verbindung geeignetes Protokoll.

In einer Ausführungsform des Verfahrens gemäß dem ersten Aspekt der Erfindung oder dem zweiten Aspekt der Erfindung besteht die Transaktionsnummer aus mindestens 6 Zeichen, vorzugsweise Ziffern, wobei die Transaktionsnummer aus mehreren Eingabeschritten des Nutzers aus der Eingabe des Kopplungsmusters gebildet wird oder mit Hilfe von Stretching-Methoden aus dem eingegebenen Kopplungsmuster umgewandelt wird.

Das Kopplungsmuster kann derart in der Form gewählt sein, dass es einer Binärdarstellung der Referenz-Transaktionsnummer entspricht. In diesem Fall kann das eingegebene Kopplungsmuster zur Übermittlung an das zweite Haushaltsgerät von dem ersten Haushaltsgerät in eine Dezimaldarstellung umgewandelt werden. Es ist aber auch denkbar, dass das eingegebene Kopplungsmuster einer Binärdarstellung entspricht, jedoch weniger als die im Standard als notwendig definierten 6 Zeichen oder Ziffern umfasst. Grund hierfür kann eine vereinfachte Eingabe für den Nutzer und damit eine Reduzierung von Eingabefehlern sein. In diesem Fall kann das eingegebene Kopplungsmuster z.B. mittels mathematischer Methoden wie kryptographischer Hash-Funktionen oder anderen Stretching-Methoden auf die notwendige minimale Zeichenfolge erweitert werden.

Das hat den Vorteil, dass hierdurch ein Kompromiss zwischen Fehlerreduzierung bei der Eingabe und Mindestmenge an Information zur Berechnung der Transaktionsnummer erreicht werden kann.

In einer Ausführungsform gemäß dem zweiten Aspekt der Erfindung erfolgt der Vergleich der Transaktionsnummer mit der Referenz-Transaktionsnummer bitweise. Dies hat den Vorteil, dass bei einer Brute-Force-Attacke bei Eingabe eines falschen Zeichens bzw. Ziffer der Authentifizierungs- und Verbindungsvorgang abgebrochen wird und neu gestartet werden muss. Infolgedessen wird vom vertrauenswürdigen Dienst ein neues Kopplungsmuster bzw. eine neue Referenz-Transaktionsnummer erzeugt und versendet. Damit beginnen das Verfahren gemäß dem ersten und zweiten Aspekt der Erfindung von neuem und ein Angriff wird erheblich erschwert.

Das gesamte System, ein erstes Haushaltsgerät, ein zweites Haushaltsgerät und einen vertrauenswürdigen Dienst umfassend, führt somit das folgende gesamte Verfahren zur sicheren Authentifizierung und Verbindung eines ersten und zweiten Haushaltsgeräts mittels Bluetooth-Low-Energy-Technologie aus, welches die Schritte umfasst:
- Einlesen eines Kopplungsmusters, welches mittels einer Eingabeeinheit des ersten Haushaltsgeräts vorzugsweise durch einen Nutzer eingegeben wurde,
- wobei das Kopplungsmuster durch einen vom ersten und zweiten Haushaltsgerät unabhängigen vertrauenswürdigen Dienst mittels einer sicheren und authentifizierten Verbindung zur Eingabe an der Eingabeeinheit bereitgestellt wurde,
- Berechnen einer Transaktionsnummer aus dem eingegebenen Kopplungsmuster durch das erste Haushaltsgerät,
- Empfangen einer Referenz-Transaktionsnummer durch das zweite Haushaltsgerät, wobei die Referenz-Transaktionsnummer vom vertrauenswürdigen Dienst über eine sichere und authentifizierte Verbindung an das zweite Haushaltsgerät gesendet wurde,
- bei der Authentifizierung und/oder Verbindung zwischen dem ersten Haushaltsgerät mit dem zweiten Haushaltsgerät Senden der berechneten Transaktionsnummer von dem ersten Haushaltsgerät an das zweite Haushaltsgerät mittels Bluetooth-Low-Energy-Technologie durch das erste Haushaltsgerät,
- bei der Authentifizierung und/oder Verbindung zwischen dem ersten Haushaltsgerät mit dem zweiten Haushaltsgerät empfangen der von dem ersten Haushaltsgerät mittels Bluetooth-Low-Energy-Technologie an das zweite Haushaltsgerät gesendeten Transaktionsnummer durch das zweite Haushaltsgerät,
- wobei die Transaktionsnummer von dem ersten Haushaltsgerät aus einem am ersten Haushaltsgerät eingegebenen Kopplungsmuster berechnet wurde,
- Vergleichen der Referenz-Transaktionsnummer mit der von dem zweiten Haushaltsgerät gesendeten Transaktionsnummer durch das zweite Haushaltsgerät,
- Authentifizieren und/oder Verbinden zwischen dem ersten und dem zweiten Haushaltsgerät, wenn die übersandte Transaktionsnummer mit der Referenz-Transaktionsnummer übereinstimmt.

Mit anderen Worten wird eine sichere Authentifizierung und Verbindung zwischen dem ersten Haushaltsgerät und dem zweiten Haushaltsgerät wie folgt bereitgestellt: Der vertrauenswürdige Dienst sendet über eine sichere und authentifizierte Verbindung ein Kopplungsmuster an das Mobilgerät bzw. an die Mobilgerätapplikation. Zusätzlich sendet der vertrauenswürdige Dienst über eine sichere und authentifizierte Verbindung eine Referenz-Transaktionsnummer an das zweite Haushaltsgerät.

Das Mobilgerät empfängt das Kopplungsmuster und stellt es dem Nutzer zur Eingabe an der Eingabeeinheit dar bzw. stellt es ihm zur Eingabe an der Eingabeeinheit bereit. Der Nutzer gibt das ihm/ihr dargestellte bzw. bereitgestellte Kopplungsmuster über die Eingabeeinheit an dem ersten Haushaltsgerät ein. Das erste Haushaltsgerät liest dabei das Kopplungsmuster ein und berechnet aus dem Kopplungsmuster eine Transaktionsnummer. Die Eingabe kann über je-des im Zusammenhang mit der Erfindung genannte Eingabemittel erfolgen, insbesondere über wenigstens zwei Taster oder Schalter oder einen NFC-Empfänger in der Eingabeeinheit, welcher ein Signal eines benachbarten NFC-Senders des Mobilgeräts empfängt.

Das zweite Haushaltsgerät empfängt die Referenz-Transaktionsnummer vom vertrauenswürdigen Dienst.

Bei der Authentifizierung und/oder Verbindung zwischen dem ersten Haushaltsgerät mit dem zweiten Haushaltsgerät sendet das erste Haushaltsgerät die aus dem eingegebenen Kopplungsmuster berechnete Transaktionsnummer. Die Transaktionsnummer wird über eine BLE-Verbindung gesendet. Das zweite Haushaltsgerät 3 empfängt die vom ersten Haushaltsgerät gesendete Transaktionsnummer und vergleicht sie mit der vom vertrauenswürdigen Dienst empfangenen Referenz-Transaktionsnummer. Die Authentifizierung ist erfolgreich und die sichere Verbindung wird hergestellt, wenn die vom ersten Haushaltsgerät gesendete Transaktionsnummer mit der Referenz-Transaktionsnummer übereinstimmt.

Gemäß einem dritten Aspekt der Erfindung wird die Aufgabe durch ein Haushaltsgerät gelöst, welches zur Ausführung eines der Verfahren gemäß dem ersten oder zweiten Aspekt der Erfindung eingerichtet ist.

Das Haushaltsgerät kann dabei ein Gerät aus der folgenden Liste sein: ein Kochfeld, ein Backofen, ein Herd, ein Grill, eine Mikrowelle, ein Dampfgarer, eine Küchenmaschine, eine Dunstabzugshaube, ein Sensorgargeschirr oder jedes andere Haushaltsgerät, insbesondere zur Verwendung in der Küche.

Das Haushaltsgerät, das eingerichtet ist, das Verfahren gemäß dem ersten Aspekt der Erfindung auszuführen, ist somit ein erstes Haushaltsgerät im Sinne des ersten und zweiten Aspekts der Erfindung und kann insbesondere umfassen:
- eine Bluetooth-Low-Energy-Empfangs- und Sendeeinheit,
- eine Eingabeeinheit zur Eingabe eines Kopplungsmusters durch einen Nutzer, wobei das Kopplungsmuster beispielsweise durch den vertrauenswürdigen Dienst bereitgestellt sein kann,
- wobei das erste Haushaltsgerät mit einem weiteren, insbesondere zweiten Haushaltsgerät per Bluetooth-Low-Energy-Technologie im Sinne des ersten Aspekts der Erfindung verbindbar sein kann,
- wobei das erste Haushaltsgerät eingerichtet sein kann, eine Transaktionsnummer aus dem vom Nutzer eingegebenen Kopplungsmuster zu berechnen,
- wobei das erste Haushaltsgerät eingerichtet sein kann, bei der sicheren Authentifizierung und/oder Verbindung mittels Bluetooth-Low-Energy-Technologie mit dem zweiten Haushaltsgerät eine Transaktionsnummer an das erste Haushaltsgerät zu übertragen.

Das Haushaltsgerät, das eingerichtet ist, das Verfahren gemäß dem zweiten Aspekt der Erfindung auszuführen, ist somit ein zweites Haushaltsgerät im Sinne des ersten und zweiten Aspekts der Erfindung und kann insbesondere umfassen:
- eine Konnektivitätseinheit, welche wenigstens eine Bluetooth-Low-Energy-Empfangs- und Sendeeinheit und eine Empfangs- und Sendeeinheit zur Verbindung mit dem Internet umfasst,
- wobei das zweite Haushaltsgerät eingerichtet sein kann, durch die Konnektivitätseinheit wenigstens eine Referenz-Transaktionsnummer von dem vertrauenswürdigen Dienst, beispielsweise über eine WLAN- oder Ethernet-Verbindung über das Internet zu empfangen,
- wobei das zweite Haushaltsgerät über eine Bluetooth-Low-Energy-Verbindung mit dem ersten Haushaltsgerät koppelbar sein kann,
- wobei das zweite Haushaltsgerät eingerichtet sein kann, bei der sicheren Authentifizierung und/oder Verbindung mit dem ersten Haushaltsgerät eine von dem ersten Haushaltsgerät an das zweite Haushaltsgerät übertragene Transaktionsnummer zu empfangen und mit der Referenz-Transaktionsnummer des vertrauenswürdigen Dienstes zu vergleichen,
- wobei die übertragene Transaktionsnummer von dem ersten Haushaltsgerät aus einem am ersten Haushaltsgerät eingegebenen Kopplungsmuster berechnet sein kann,
- wobei die sichere Authentifizierung und/oder Verbindung zwischen dem ersten und dem zweiten Haushaltsgerät aufgebaut werden kann, wenn die übersandte Transaktionsnummer mit der Referenz-Transaktionsnummer übereinstimmt.

Für die im Zusammenhang mit dem dritten Aspekt der Erfindung verwendeten Ausdrücke und Begriffe sei auf die entsprechenden Ausdrücke, Begriffe und Erläuterungen zum ersten und zweiten Aspekt der Erfindung verwiesen, auf deren Wiederholung der besseren Lesbarkeit wegen an dieser Stelle verzichtet wird.

Derartige Haushaltsgeräte können bei Ihrem Betrieb und Ausführung des Verfahrens gemäß dem ersten oder zweiten Aspekt der Erfindung direkt die Nachteile im Stand der Technik überwinden.

Es sei hiermit klargestellt, dass eine oder mehrere der oben beschriebenen bevorzugten Ausführungsformen zu den verschiedenen Aspekten der Erfindung, soweit widerspruchsfrei, miteinander kombinierbar sind und ebenfalls bevorzugte Ausführungsformen darstellen.

Nachfolgend werden bevorzugte Ausführungsformen der Erfindung unter Bezugnahme auf die beiliegende Zeichnung näher erläutert und beschrieben. Dabei zeigt:

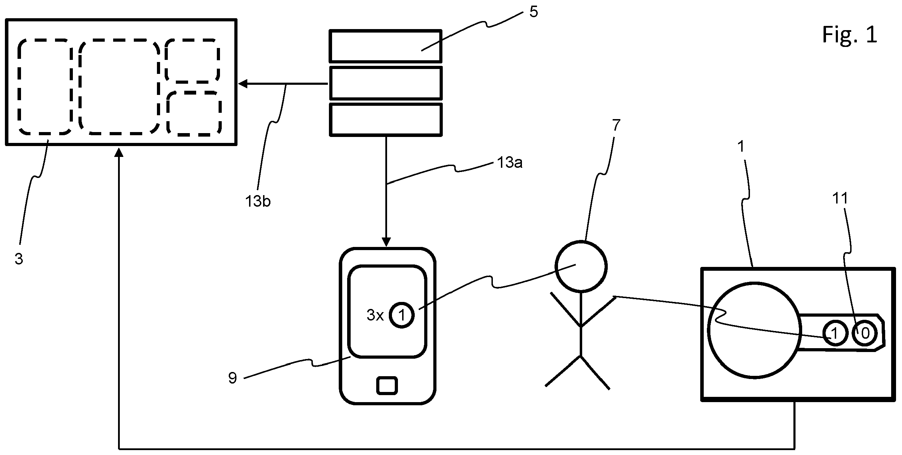

Fig. 1 eine schematische Darstellung des Gesamtsystems, welches an den Verfahren gemäß dem ersten und zweiten Aspekt der Erfindung beteiligt ist.

Figur 1 zeigt eine schematische Darstellung des Gesamtsystems, welches an den Verfahren gemäß dem ersten und zweiten Aspekt der Erfindung beteiligt ist.

Figur 1 zeigt dabei ein erstes Haushaltsgerät 1, ein zweites Haushaltsgerät 3, einen vertrauenswürdigen Dienst 5, einen Nutzer 7 und ein Mobilgerät 9. Das erste Haushaltsgerät 1 weist eine Eingabeeinheit 11 auf. Der vertrauenswürdige Dienst 5 ist mittels einer sicheren und authentifizierten Verbindung 13a mit dem Mobilgerät 9 und mittels einer sicheren und authentifizierten Verbindung 13b mit dem zweiten Haushaltsgerät 3 zeitweise verbunden. Die sichere und authentifizierte Verbindung 13a, 13b kann eine Internetverbindung sein, die vorzugsweise mittels des Transport Layer Security-Protokoll gesichert ist. Beispielsweise kann die Verbindung zum Internet mittels WLAN oder Mobilfunk (im Fall der Verbindung 13a zum Mobilfunk-gerät 9) oder mittels WLAN oder Ethernet (im Fall der Verbindung 13b zum zweiten Haushaltsgerät 3) hergestellt werden.

Auf dem Mobilgerät 9 kann eine Mobilgerätapplikation ausgeführt werden, welche ein auf dem Mobilgerät 9 empfangenes Kopplungsmuster dem Nutzer 7 darstellt.

Eine sichere Authentifizierung und Verbindung zwischen dem ersten Haushaltsgerät 1 und dem zweiten Haushaltsgerät 3 wird nun wie folgt bereitgestellt: das Verfahren zur Authentifizierung und Verbindung des ersten und zweiten Haushaltsgeräts 1, 3 wird über das Mobilgerät 9 bzw. die Mobilgerätapplikation gestartet. Dazu betätigt der Nutzer 7 die Mobilgerätapplikation entsprechend. Die Mobilgerätapplikation teilt dem vertrauenswürdigen Dienst 5 mit, dass das Verfahren zur Authentifizierung und Verbindung zwischen dem ersten und zweiten Haushaltsgerät gestartet werden soll. Der vertrauenswürdige Dienst 5 sendet infolgedessen über eine sichere und authentifizierte Verbindung 13a ein Kopplungsmuster an das Mobilgerät 9 bzw. an die Mobilgerätapplikation. Zusätzlich sendet der vertrauenswürdige Dienst 5 über eine sichere und authentifizierte Verbindung 13b eine Referenz-Transaktionsnummer an das zweite Haushaltsgerät 3. Das zweite Haushaltsgerät 3 wechselt daraufhin in den zur Authentifizierung und Verbindung notwendigen Zustand.

Der vertrauenswürdige Dienst 5 kann beispielsweise ein Cloudservice oder ein Backendsystem in einer gesicherten Umgebung sein.

Das Mobilgerät 9 empfängt das Kopplungsmuster und stellt es dem Nutzer 9 zur Eingabe an der Eingabeeinheit 11 dar bzw. stellt es ihm zur Eingabe an der Eingabeeinheit 11 bereit. Der Nutzer gibt das ihm/ihr dargestellte bzw. bereitgestellte Kopplungsmuster über die Eingabeeinheit 11 an dem ersten Haushaltsgerät 1 ein. Das erste Haushaltsgerät 1 liest das Kopplungsmuster ein und berechnet aus dem Kopplungsmuster eine Transaktionsnummer. Vorzugsweise besteht die Transaktionsnummer aus mindestens 6 Zeichen, welche bevorzugt Ziffern sind. Dabei kann die Transaktionsnummer aus mehreren Eingabeschritten des Nutzers 7 aus der Eingabe des Kopplungsmusters gebildet werden oder mit Hilfe von Stretching-Methoden aus dem eingegebenen Kopplungsmuster umgewandelt werden.

Die Eingabe des Kopplungsmusters kann über die in Fig. 1 beispielhaft gezeigten zwei Tasten erfolgen. Das Kopplungsmuster kann eine Abfolge von Tastenbetätigungen sein. Die Abfolge von Tastenbetätigungen kann sich aus der Variation mindestens einer der nachfolgenden Parameter ergeben: Dauer der Tastenbetätigung, Dauer zwischen Tastenbetätigungen, Anzahl der Tastenbetätigung, Abfolge der Betätigung gleicher und/oder unterschiedlicher Tasten. Das Kopplungsmuster kann durch den vertrauenswürdigen Dienst 5 aus der Referenz-Transaktionsnummer berechnet werden. Alternativ kann die Referenz-Transaktionsnummer aus dem Kopplungsmuster berechnet werden.

Die Eingabe kann alternativ zu den in Fig. 1 beispielhaft gezeigten zwei Tasten auch über jedes andere im Zusammenhang mit der Erfindung genannte Eingabemittel oder eine Kombination daraus erfolgen, insbesondere über wenigstens zwei oder mehr Taster oder Schalter oder einen NFC-Empfänger in der Eingabeeinheit 11, welcher ein Signal eines benachbarten NFC-Senders des Mobilgeräts 9 empfängt.

Das zweite Haushaltsgerät 3 empfängt die Referenz-Transaktionsnummer vom vertrauenswürdigen Dienst 5.

Bei der Authentifizierung und/oder Verbindung zwischen dem ersten Haushaltsgerät 1 mit dem zweiten Haushaltsgerät 3 sendet das erste Haushaltsgerät 1 die aus dem eingegebenen Kopplungsmuster berechnete Transaktionsnummer an das zweite Haushaltsgerät 3. Die Transaktionsnummer wird über eine BLE-Verbindung gesendet. Das zweite Haushaltsgerät 3 empfängt die vom ersten Haushaltsgerät 1 gesendete Transaktionsnummer und vergleicht sie mit der vom vertrauenswürdigen Dienst 5 empfangenen Referenz-Transaktionsnummer. Der Vergleich der Transaktionsnummer mit der Referenz-Transaktionsnummer erfolgt vorzugs-weise bitweise. Die Authentifizierung ist erfolgreich und die sichere Verbindung wird hergestellt, wenn die vom ersten Haushaltsgerät 1 gesendete Transaktionsnummer mit der Referenz-Transaktionsnummer übereinstimmt.

Das erste Haushaltsgerät 1 führt im oben beschriebenen Zusammenhang die folgenden Verfahrensschritte aus:
- Einlesen eines Kopplungsmusters, welches mittels einer Eingabeeinheit 11 des ersten Haushaltsgeräts 1 vorzugsweise durch einen Nutzer 7 eingegeben wurde,
- wobei das Kopplungsmuster durch einen vom ersten und zweiten Haushaltsgerät 1, 3 unabhängigen vertrauenswürdigen Dienst 5 mittels einer sicheren und authentifizierten Verbindung 13a zur Eingabe an der Eingabeeinheit 11 bereitgestellt wurde,
- Berechnen einer Transaktionsnummer aus dem eingegebenen Kopplungsmuster durch das erste Haushaltsgerät 1,
- bei der Authentifizierung und/oder Verbindung zwischen dem ersten Haushaltsgerät 1 mit dem zweiten Haushaltsgerät 3 Senden der berechneten Transaktionsnummer von dem ersten Haushaltsgerät 1 an das zweite Haushaltsgerät 3 mittels Bluetooth-Low-Energy-Technologie.

Das zweite Haushaltsgerät 3 führt im oben beschriebenen Zusammenhang die folgenden Verfahrensschritte aus:
- Empfangen einer Referenz-Transaktionsnummer durch das zweite Haushaltsgerät 3, wobei die Referenz-Transaktionsnummer von einem vertrauenswürdigen Dienst 5 über eine sichere und authentifizierte Verbindung 13b an das zweite Haushaltsgerät gesendet wurde,
- wobei der vertrauenswürdige Dienst 5 vom ersten und zweiten Haushaltsgerät 3 unabhängig ist,
- bei der Authentifizierung und/oder Verbindung zwischen dem ersten Haushaltsgerät 1 mit dem zweiten Haushaltsgerät 3 Empfangen einer von dem ersten Haushaltsgerät 1 mittels Bluetooth-Low-Energy-Technologie an das zweite Haushaltsgerät 3 gesendeten Transaktionsnummer,
- wobei die Transaktionsnummer von dem ersten Haushaltsgerät 1 aus einem am ersten Haushaltsgerät 1 eingegebenen Kopplungsmuster berechnet wurde,
- Vergleichen der Referenz- Transaktionsnummer mit der von dem zweiten Haushaltsgerät 3 gesendeten Transaktionsnummer,
- Authentifizieren und/oder Verbinden zwischen dem ersten und dem zweiten Haushaltsgerät 1, 3, wenn die übersandte Transaktionsnummer mit der Referenz-Transaktionsnummer übereinstimmt.

Vorzugsweise wird bei der Authentifizierung und/oder Verbindung zwischen dem ersten Haushaltsgerät 1 mit dem zweiten Haushaltsgerät 3 die Transaktionsnummer im Bluetooth-Low-Energy Passkey Entry Protocol verwendet.

Das erste und zweite Haushaltsgerät 1, 3 sind ausgestaltet und eingerichtet, die oben genannten Verfahren entsprechend durchzuführen.

## Patentansprüche

1. Verfahren zur sicheren Authentifizierung und Verbindung eines ersten Haushaltsgeräts (1) mit einem zweiten Haushaltsgerät (3) mittels Bluetooth-Low-Energy-Technologie umfassend die Schritte:
- Einlesen eines Kopplungsmusters, welches mittels einer Eingabeeinheit (11) des ersten Haushaltsgeräts (1) vorzugsweise durch einen Nutzer (7) eingegeben wurde,
- wobei das Kopplungsmuster durch einen vom ersten und zweiten Haushaltsgerät (3) unabhängigen vertrauenswürdigen Dienst (5) mittels einer sicheren und authentifizierten Verbindung (13a) zur Eingabe an der Eingabeeinheit (11) bereitgestellt wurde,
- Berechnen einer Transaktionsnummer aus dem eingegebenen Kopplungsmuster durch das erste Haushaltsgerät (1),
- bei der Authentifizierung und/oder Verbindung zwischen dem ersten Haushaltsgerät (1) mit dem zweiten Haushaltsgerät (3) Senden der berechneten Transaktionsnummer von dem ersten Haushaltsgerät (1) an das zweite Haushaltsgerät (3) mittels Bluetooth-Low-Energy-Technologie.

2. Verfahren nach Anspruch 1, wobei das Kopplungsmuster über ein Mobilgerät (9) und/oder eine Mobilgerätapplikation dem Nutzer (7) zur Eingabe dargestellt oder bereitgestellt wird, wobei vor der Darstellung oder Bereitstellung zur Eingabe das Kopplungsmuster von dem vertrauenswürdigen Dienst (5) an das Mobilgerät (9) und/oder die Mobilgerätapplikation versandt und durch das Mobilgerät (9) und/oder die Mobilgerätapplikation empfangen wird.

3. Verfahren nach Anspruch 1 oder 2, wobei die sichere und authentifizierte Verbindung zwischen dem Mobilgerät (9) und/oder der Mobilgerätapplikation und dem vertrauenswürdigen Dienst mittels des Transport Layer Security-Protokolls gesicherte Mobilfunk- oder WLAN-Verbindung über das Internet ist.

4. Verfahren nach einem der vorherigen Ansprüche, wobei die Eingabeeinheit (11) des ersten Haushaltsgeräts (1) wenigstens zwei Tasten umfasst.

5. Verfahren nach Anspruch 4, wobei das Kopplungsmuster einer Abfolge von Tastenbetätigungen entspricht.

6. Verfahren nach Anspruch 5, wobei die Abfolge von Tastenbetätigungen durch Variation mindestens einer der nachfolgenden Parameter entsteht: Dauer der Tastenbetätigung, Dauer zwischen Tastenbetätigungen, Anzahl der Tastenbetätigung, Abfolge der Betätigung gleicher und/oder unterschiedlicher Tasten.

7. Verfahren zur sicheren Authentifizierung und Verbindung eines zweiten Haushaltsgerätes (3) mit einem ersten Haushaltsgerät (1) mittels Bluetooth-Low-Energy-Technologie umfassend die Schritte:
- Empfangen einer Referenz-Transaktionsnummer durch das zweite Haushaltsgerät (3), wobei die Referenz-Transaktionsnummer von einem vertrauenswürdigen Dienst (5) über eine sichere und authentifizierte Verbindung an das zweite Haushaltsgerät (3) gesendet wurde,
- wobei der vertrauenswürdige Dienst (5) vom ersten und zweiten Haushaltsgerät (3) unabhängig ist,
- bei der Authentifizierung und/oder Verbindung zwischen dem ersten Haushaltsgerät (1) mit dem zweiten Haushaltsgerät (3) Empfangen einer von dem ersten Haushaltsgerät (1) mittels Bluetooth-Low-Energy-Technologie an das zweite Haushaltsgerät (3) gesendeten Transaktionsnummer,
- wobei die Transaktionsnummer von dem ersten Haushaltsgerät (1) aus einem am ersten Haushaltsgerät (1) eingegebenen Kopplungsmuster berechnet wurde,
- Vergleichen der Referenz- Transaktionsnummer mit der von dem zweiten Haushaltsgerät (3) gesendeten Transaktionsnummer,
- Authentifizieren und/oder Verbinden zwischen dem ersten und dem zweiten Haushaltsgerät (3), wenn die übersandte Transaktionsnummer mit der Referenz-Transaktionsnummer übereinstimmt.

8. Verfahren nach Anspruch 7, wobei die sichere und authentifizierte Verbindung zwischen dem zweiten Haushaltsgerät (3) und dem vertrauenswürdigen Dienst (5) eine mittels Transport Layer Security-Protokoll gesicherte WLAN- oder Ethernet-Verbindung über das Internet ist.

9. Verfahren nach einem der vorherigen Ansprüche, wobei der vertrauenswürdige Dienst (5) ein Cloudservice oder ein Backendsystem in einer gesicherten Umgebung ist.

10. Verfahren nach einem der vorherigen Ansprüche, wobei das Kopplungsmuster durch den vertrauenswürdigen Dienst (5) aus einer Referenz-Transaktionsnummer berechnet wird oder eine Referenz-Transaktionsnummer aus einem Kopplungsmuster berechnet wird.

11. Verfahren nach einem der vorherigen Ansprüche, wobei bei der Authentifizierung und/oder Verbindung Bluetooth-Low-Energy Security Mode 1 Level 3 oder Level 4 verwendet wird.

12. Verfahren nach einem der vorherigen Ansprüche, wobei bei der Authentifizierung und/oder Verbindung zwischen dem ersten Haushaltsgerät (1) mit dem zweiten Haushaltsgerät (3) die Transaktionsnummer im Bluetooth-Low-Energy Passkey Entry Protocol verwendet wird.

13. Verfahren nach einem der vorherigen Ansprüche, wobei die Transaktionsnummer aus mindestens 6 Zeichen, vorzugsweise Ziffern, besteht, wobei die Transaktionsnummer aus mehreren Eingabeschritten des Nutzers (7) aus der Eingabe des Kopplungsmusters gebildet wird oder mit Hilfe von Stretching-Methoden aus dem eingegebenen Kopplungsmuster umgewandelt wird.

14. Verfahren nach einem der vorherigen Ansprüche, wobei der Vergleich der Transaktionsnummer mit der Referenz-Transaktionsnummer bitweise erfolgt.

15. Haushaltsgerät (1, 3), welches zur Ausführung eines der Verfahren nach wenigstens einem der vorgenannten Ansprüche eingerichtet ist.
